# EUROPÄISCHE PATENTSCHRIFT

(11) **EP 1 082 992 B1**
(45) Veröffentlichungstag und Bekanntmachung des Hinweises auf die Patenterteilung: **09.08.2006**
(21) Anmeldenummer: 00117911.8
(22) Anmeldetag: 21.08.2000
(51) Int. Cl.: B01D 53/26, F04B 39/16

(54) **Einrichtung zum Filtern und Trocknen von Druckluft**
Device for filtering and drying of compressed air
Dispositif pour filtrer et sécher de l'air comprimé

(30) Priorität: 08.09.1999 DE 19942763
(43) Veröffentlichungstag der Anmeldung: 14.03.2001
(73) Patentinhaber: Firma Schneider Druckluft GmbH, 72770 Reutlingen (DE)
(72) Erfinder: Schneider, Wilfried, 72793 Pfullingen (DE); Klumpp, Erich, 72138 Kirchentellingsfurt (DE); Schmidt, Gunther, 72813 St. Johann-Würtingen (DE)
(74) Vertreter: Reimold, Otto

(56) Entgegenhaltungen:
- EP-A- 0 291 630
- EP-A- 0 846 484
- DE-U- 29 515 689
- DE-U- 29 608 952
- US-A- 4 670 223

## Beschreibung

Die Erfindung betrifft eine Einrichtung zum Filtern und Trocknen von Druckluft gemäss dem Oberbegriff des Anspruchs 1.

Eine solche Einrichtung ist beispielsweise aus dem deutschen Gebrauchsmuster DE 295 15 689 U bekannt. Bei dieser bekannten Aggregation von Geräten zur Druckluftaufbereitung sind ein Drucklufttrockner, eine Druckluftfilterkombination, ein Druckluftvorfilter sowie ein Druckluftspeicher zu einer Baugruppe kombiniert, die zudem eine Kondensataufbereitung und Entsorgung enthält, die aus Kondensatableiter und Kondensatsammelleitung sowie Öl-Wasser-Separator besteht. Der Druckluftspeicher ist als ein Standgerät realisiert, an dessen unterem Ende eine Kondensatableiter angeordnet ist. Neben dem Druckluftspeicher ist oberhalb eines Öl-Wasser-Separators eine Druckluftaufbereitungseinheit angeordnet, die eine Druckluftfilterkombination sowie einen Trockner umfasst. Die beiden letztgenannten Baugruppen sind an einer Art Gestellrahmen angeordnet.

Das deutsche Gebrauchsmuster DE 296 08 952 U betrifft eine Kompakt-Druckluftstation, die einen Kompressor sowie einen Druckluft-Kältetrockner aufweist, die vertikal übereinander angeordnet sind.

Für druckluftbetriebene Werkzeuge sollte die Druckluft möglichst trocken und frei von Schmutzpartikeln sein. Zu diesem Zweck werden die hierfür erforderlichen Geräte, wie Filter und Flüssigkeitsabscheider, zu einer Druckluftaufbereitungsanlage vor Ort zusammengestellt, wobei unterschiedliche handelsübliche Filter- und Abscheideeinrichtungen Verwendung finden. Problematisch ist dabei, die Dimensionierung der unterschiedlichen Einrichtungen aufeinander abzustimmen, um mit einem vertretbaren Aufwand eine gut aufbereitete Druckluft bereitstellen zu können.

Der Erfindung liegt die Aufgabe zugrunde, eine kompakte Einrichtung zum Filtern und Trocknen von Druckluft zu schaffen, bei der kostengünstig eine möglichst optimale Druckluftaufbereitung möglich ist.

Zur Lösung der Aufgabe ist eine Einrichtung gemäß der technischen Lehre des Anspruchs Anspruch 1 vorgesehen. In einem gemeinsamen Gestellrahmen einer Druckluftaufbereitungseinheit sind aufeinanderfolgend ein Vorfilter, ein Kältetrockner und ein Nachfilter angeordnet, wobei dem Vorfilter die aufzubereitende Druckluft zugeführt wird. Ein im Gestellrahmen angeordneter Sammelbehälter nimmt das an Vor- und Nachfilter sowie an dem Kältetrockner anfallende Kondensat auf. Es ergibt sich somit eine kompakte Druckluftaufbereitungseinheit, bei der sämtliche Einrichtungen in ihrer Dimensionierung aufeinander optimal abgestimmt sein können. Die Druckluftaufbereitungseinheit hat außerdem den Vorteil, dass sie sehr platzsparend ist und mit dem Sammelbehälter eine optimale Entsorgung des Kondensats ermöglicht.

Dabei ist es besonders vorteilhaft, wenn die Druckluftaufbereitungseinheit zusätzlich einen Kondensat-Trennapparat umfasst, der das anfallende Kondensat in Wasser und Öl auftrennen und in separate Auffangbehälter abführen kann. Das dadurch erhaltene Wasser kann als Abwasser der Kanalisation zugeleitet werden, während das in wesentlich geringeren Mengen anfallende Ölgemisch separat entsorgt werden kann.

Bei einer besonders bevorzugten Ausführungsform sind wenigstens einzelne Komponenten der Druckluftaufbereitungseinheit über Umgehungsleitungen überbrückbar, so dass beispielsweise an einer Filtereinheit Serviceleistungen durchgeführt werden können, während diese Filtereinheit überbrückt ist. Die Druckluftaufbereitungseinheit kann somit auch während der Ausführung von Servicearbeiten weiterbetrieben werden.

Die verwendeten Filtereinheiten können als Aktivkohlefilter oder Sterilfilter ausgebildet sein. Zum Trocknen der Druckluft kann ein Membrantrockner Verwendung finden.

An den Eingang der Druckluftaufbereitungseinheit lässt sich ein handelsüblicher Luftverdichter anschließen. Das im oder nach dem Luftverdichter anfallende Kondensat kann über einen separaten Anschluss ebenfalls dem Sammelbehälter der Druckluftaufbereitungseinheit zugeführt werden, so dass auch das im Luftverdichter anfallende Kondensat in Wasseranteile und Ölanteile in der Druckluftaufbereitungseinheit aufgespalten werden kann.

Es ist noch zu erwähnen, dass die Wasserqualität aus der Kondensatentsorgung abgeleitet werden kann und eine Probenentnahme sehr leicht möglich ist.

Bei Ausfall einzelner Komponenten kann die Druckluftaufbereitungseinheit im Rahmen einer Notlauffunktion weiterbetrieben werden, in dem entsprechende Umgehungsleitungen freigeschaltet werden.

Die Erfindung wird nachfolgend anhand eines in der Zeichnung dargestellten Ausführungsbeispiels näher erläutert.

Es zeigen:
- Figur 1: ein Blockschaltbild einer Druckluftanlage mit einer Druckluftaufbereitungseinheit,
- Figur 2: die Vorderansicht der in Fig. 1 verwendeten Druckluftaufbereitungseinheit und
- Figur 3: die rückseitige Ansicht der in Fig. 1 verwendeten Druckluftaufbereitungseinheit.

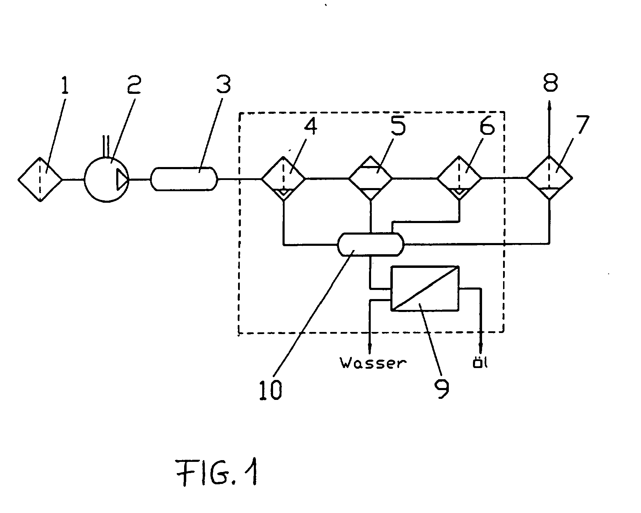

Das in Fig. 1 dargestellte Blockschaltbild umfasst ein Vorfilter 1, über das ein Verdichter 2 Luft ansaugt, die verdichtet im Druckluftspeicherbehälter 3 gespeichert wird. Der Ausgang des Druckluftspeicherbehälters 3 ist mit dem Eingang einer Druckluftaufbereitungseinheit verbunden, deren Komponenten von einer unterbrochenen Linie in Fig.1 umrahmt sind.

Die Druckluftaufbereitungseinheit umfasst einen Vorfilter 4, dem die Druckluft vom Druckluftspeicherbehälter 3 zugeführt wird. Dem Vorfilter 4 ist ein Kältetrockner 5 nachgeschaltet, dessen Ausgang wiederum mit einem Nachfilter 6 verbunden ist. Die durch die Komponenten 4 bis 6 aufbereitete Druckluft wird dann über einen Ausgang der Druckluftaufbereitungseinheit einem Membrantrockner 7 zugeführt, der einen Ausgang 8 für den Anschluss eines druckluftbetriebenen Geräts hat. Der Membrantrockner 7 kann auch in der Druckluftaufbereitungseinheit enthalten sein.

Das in den Komponenten 4 bis 7 anfallende Kondensat wird über einen Sammelbehälter 10 zu einem Kondensat-Trennapparat 9 geleitet, der das Kondensat in Wasser und Öl trennt. Die Druckluftaufbereitungseinheit kann Auffangbehälter für das Wasser und das Öl besitzen, wobei das Wasser auch direkt als Abwasser abgeleitet werden kann, da es durch die Abspaltung der ölhaltigen Gemischanteile eine entsprechende Abwasserqualität besitzt.

Als Flüssigkeitsabscheider wird in der Druckluftaufbereitungseinheit vorzugsweise ein Kältetrockner 5 verwendet, der eine Energiesparschaltung mit einem abschaltbaren Kältekreislauf hat. Der Kältekreislauf ist nur dann wirksam, wenn die Druckluftaufbereitung dies erfordert. Der zusätzliche Membrantrockner 7 ist dann vorteilhaft, wenn besonders tiefe Drucktaupunkte erreicht werden sollen. Die gesamte Druckluftaufbereitungseinheit ist vorzugsweise so in einem gemeinsamen Gestellrahmen montiert, dass ein möglichst tiefer Schwerpunkt und damit eine möglichst hohe Standsicherheit erreicht wird. Die Druckluftaufbereitungseinheit ist außerdem sehr einfach mit zusätzlichen Filtereinrichtungen oder Trockeneinrichtungen erweiterbar, beispielsweise mit einem Aktivkohlefilter, Sterilfilter und/oder mit dem bereits erwähnten Membrantrockner 7.

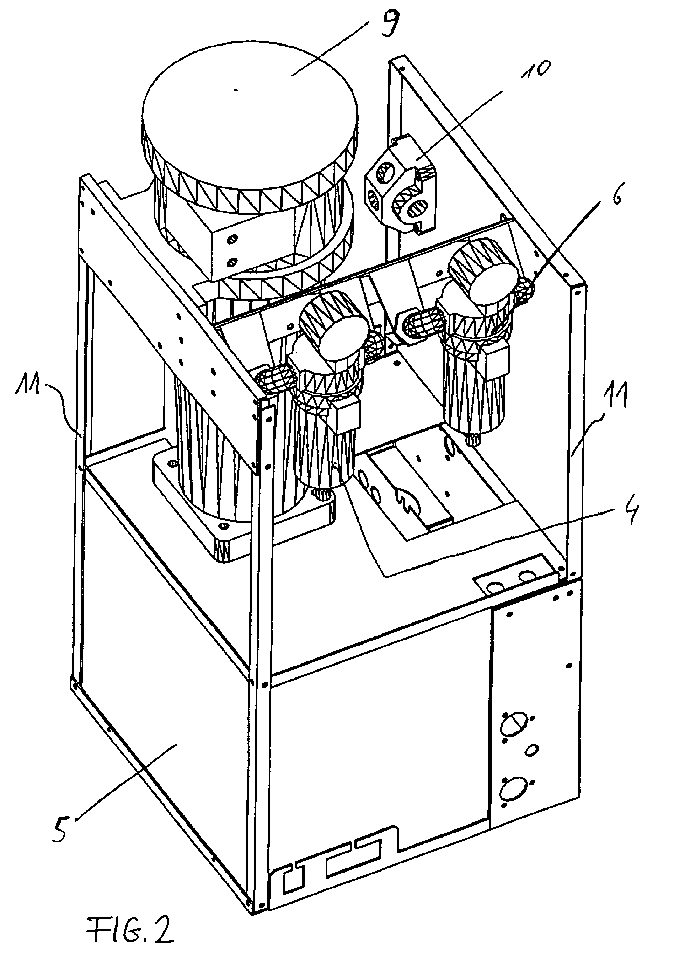

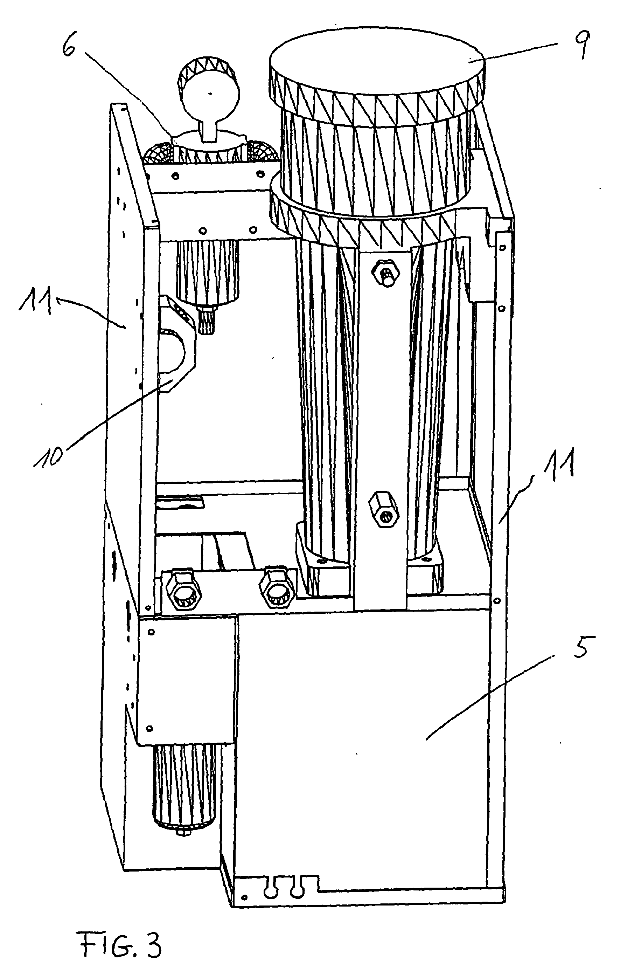

Anhand der Figuren 2 und 3 ist die räumliche Anordnung der in einem Gestell 11 montierten Komponenten der Druckluftaufbereitungseinheit ersichtlich.

## Patentansprüche

1. Einrichtung zum Filtern und Trocknen von durch einen Luftverdichter (2) bereitgestellter Druckluft mittels einem Flüssigkeitsabscheider und wenigstens einer in einem Gestellrahmen (11) einer Druckluftaufbereitungseinheit angeordneten Filtereinheit, **dadurch gekennzeichnet, dass** in dem Gestellrahmen der Druckluftaufbereitungseinheit aufeinanderfolgend ein Vorfilter (4), ein Kältetrockner (5) und ein Nachfilter (6) angeordnet sind, dass dem Vorfilter (4) die aufzubereitende Druckluft zugeführt wird, und dass ein im Gestellrahmen (11) angeordneter Sammelbehälter (10) das an Vor- und Nachfilter (4; 6) sowie an dem Kältetrockner (5) anfallende Kondensat aufnimmt.

2. Einrichtung nach Anspruch 1, **dadurch gekennzeichnet, dass** die Druckluftaufbereitungseinheit einen Kondensat-Trennapparat (9) enthält, dessen Eingang mit einem Ausgang des Sammelbehälters (10) verbunden ist.

3. Einrichtung nach Anspruch 2, **dadurch gekennzeichnet, dass** der Kondensat-Trennapparat (9) einen ersten Ablaufstutzen für Wasser und einen zweiten Ablaufstutzen für das davon abgetrennte und meistens ölhaltige Gemisch hat.

4. Einrichtung nach einem der vorhergehenden Ansprüche, **dadurch gekennzeichnet, dass** einzelne oder sämtliche in der Druckluftaufbereitungseinheit enthaltenen Komponenten über Umgehungsleitungen überbrückbar sind.

5. Einrichtung nach einem der vorhergehenden Ansprüche, **dadurch gekennzeichnet, dass** in der Druckluftaufbereitungseinheit Aktivkohlefilter und/oder Sterilfilter und/oder ein Membrantrockner (7) enthalten sind.

6. Einrichtung nach einem der vorhergehenden Ansprüche, **dadurch gekennzeichnet, dass** der Sammelbehälter (10) über einen separaten Anschluss das im und/oder nach dem Luftverdichter (2) anfallende Kondensat aufnimmt.

## Claims

1. Apparatus for filtering and drying compressed air supplied by a compressor (2) by means of a liquid separator and at least one filter unit located in a frame (11) of a compressed air conditioning unit, **characterised in that** the frame of the compressed air conditioning unit consecutively accommodates a pre-filter (4), a refrigeration drier (5) and an after-filter (6), **in that** the compressed air to be conditioned is fed to the pre-filter (4), and **in that** a collecting tank (10) located in the frame (11) receives the condensate generated at the pre- and after-filters (4; 6) and at the refrigeration drier (5).

2. Apparatus according to claim 1, **characterised in that** the compressed air conditioning unit incorporates a condensate separator (9) with an inlet connected to an outlet of the collecting tank (10).

3. Apparatus according to claim 2, **characterised in that** the condensate separator (9) has a first drain connection for water and a second drain connection for the mixture separated therefrom and usually containing oil.

4. Apparatus according to any of the preceding claims, **characterised in that** individual or all components of the compressed air conditioning unit can be bridged by bypass lines.

5. Apparatus according to any of the preceding claims, **characterised in that** the compressed air conditioning unit contains activated carbon filters and/or sterile filters and/or a diaphragm drier (7).

6. Apparatus according to any of the preceding claims, **characterised in that** the collecting tank (10) receives the condensate generated in and/or downstream of the compressor (2) via a separate connection.

## Revendications

1. Installation pour filtrer et sécher l'air comprimé, mis à disposition par un compresseur d'air (2), au moyen d'un séparateur de liquide et d'au moins une unité de filtrage, agencée dans un bâti (11) d'une unité de traitement de l'air comprimé, **caractérisée en ce que** dans le bâti de l'unité de traitement de l'air comprimé sont montés successivement un préfiltre (4), un dessiccateur frigorifique (5) et un post-filtre (6), **en ce que** l'air comprimé à traiter est acheminé vers le préfiltre (4), et **en ce qu'**un collecteur (10), agencé dans le bâti (11), reçoit le condensat produit au niveau du préfiltre (4) et du post-filtre (6), ainsi que du dessiccateur frigorifique (5).

2. Installation selon la revendication 1, **caractérisée en ce que** l'unité de traitement de l'air comprimé comporte un dispositif de séparation du condensat (9), dont l'entrée est reliée à une sortie du collecteur (10).

3. Installation selon la revendication 2, **caractérisée en ce que** le dispositif de séparation du condensat (9) comporte une première tubulure d'évacuation pour l'eau et une deuxième tubulure d'évacuation pour le mélange séparé de l'eau et contenant le plus souvent de l'huile.

4. Installation selon l'une quelconque des revendications précédentes, **caractérisée en ce que** certains composants ou tous les composants contenus dans l'unité de traitement de l'air comprimé peuvent être shuntés par des conduites de contournement.

5. Installation selon l'une quelconque des revendications précédentes, **caractérisée en ce que** l'unité de traitement de l'air comprimé comporte des filtres à charbon actif et/ou des filtres stériles et/ou un dessiccateur à membrane (7).

6. Installation selon l'une quelconque des revendications précédentes, **caractérisée en ce que** le collecteur (10) reçoit, par l'intermédiaire d'un branchement séparé, le condensat produit dans et/ou en aval du compresseur d'air (2).
